(19) Europäisches Patentamt
European Patent Office
Office européen des brevets

(11) Veröffentlichungsnummer: **0 419 927 A1**

# (12) EUROPÄISCHE PATENTANMELDUNG

(21) Anmeldenummer: **90117447.4**

(22) Anmeldetag: **11.09.90**

(51) Int. Cl.5: **C08L 67/02**, C08K 3/30, //(C08L67/02,51:04)

(30) Priorität: **23.09.89 DE 3931772**

(43) Veröffentlichungstag der Anmeldung: **03.04.91 Patentblatt 91/14**

(84) Benannte Vertragsstaaten: **DE FR GB IT NL**

(71) Anmelder: **BAYER AG**

**W-5090 Leverkusen 1 Bayerwerk(DE)**

(72) Erfinder: **Kirsch, Jürgen, Dr.**
**Hahnenweg 1**
**W-5000 Köln 80(DE)**
Erfinder: **Piejko, Karl-Erwin, Dr.**
**Unterscheider Weg 7a**
**W-5060 Bergisch Gladbach 2(DE)**
Erfinder: **Lindner, Christian, Dr.**
**Im Wasserblech 11**
**W-5000 Köln 80(DE)**
Erfinder: **Idel, Karsten-Josef, Dr.**
**Am Schwarzkamp 38**
**W4150 Krefeld(DE)**
Erfinder: **Gehrke, Hans-Georg**
**Schlehdornweg 29**
**W-5068 Odenthal(DE)**

## (54) Thermoplastische Formmassen aus Polyalkylenterephthalat, speziellem Bariumsulfat, teilchenförmigen Pfropfpolymerisaten und gegebenenfalls Verstärkungsmitteln.

(57) Thermoplastische Formmassen aus Polyalkylenterephthalat, speziellem Bariumsulfat, teilchenförmigen Pfropfpolymerisaten und gegebenenfalls Verstärkungsmitteln zeichnen sich gegenüber bekannten, elastomermodifizierten Polyalkylenterephthalaten, insbesondere Polyethylenterephthalaten, durch eine verbesserte Wärmeformbeständigkeit und Zähigkeit aus.

EP 0 419 927 A1

# THERMOPLASTISCHE FORMMASSEN AUS POLYALKYLENTEREPHTHALAT, SPEZIELLEM BARIUMSULFAT, TEILCHENFÖRMIGEN PFROPFPOLYMERISATEN UND GEGEBENENFALLS VERSTÄRKUNGSMITTELN

Die Erfindung betrifft thermoplastische Formmassen aus Polyalkylenterephthalat, speziellem Bariumsulfat, teilchenförmigen Pfropfpolymerisaten und gegebenenfalls Verstärkungsmitteln sowie die Verwendung der thermoplastischen Formmassen zur Herstellung von Formkörpern, Halbzeugen und Folien.

Die zur Zeit bekannten, elastomermodifizierten Polyalkylenterephthalate, insbesondere Polyethylenterephthalate (s. z.B. EP 0 268 280, JP 60 149 654, JP 60 161 455, DE 3 603 185, JP 60 233 149, US 4 647 619, JP 63 110 246, JP 61 241 353), zeigen durchweg alle den Nachteil, das sie z.B. die im Polyethylenterephthalat (PET) vorhandenen Möglichkeiten hinsichtlich einer hohen Wärmeformbeständigkeit bei guter Zähigkeit nur ungenügend ausschöpfen.

Es wurde nun gefunden, das thermoplastische Formmassen aus Polyalkylenterephthalat, Bariumsulfat mit definierter Korngröße und/oder aktivierter Oberfläche, teilchenförmigen Pfropfpolymerisaten und gegebenenfalls Verstärkungsmitteln sich durch hohe Wärmeformbeständigkeit und gute Zähigkeit auszeichnen.

Gegenstand der vorliegenden Erfindung sind daher thermoplastische Formmassen aus

A) 1 bis 99 Gew.-Teilen Polyalkylenterephthalat,

B1) 0,1 bis 15 Gew.-Teilen Bariumsulfat mit chemoreaktiver Oberfläche, hergestellt durch Fällung von Bariumionen mit Sulfationen im wäßrigen Medium in Gegenwart von zusätzlichen, mit Bariumionen fällbare und schwer lösliche Bariumverbindungen bildenden Anionen wasserlöslicher Verbindungen, wobei das erhaltene, gegebenenfalls mit Kupplungsmitteln nachbehandelte chemoreaktive Bariumsulfat Korngrößen von <0,1 $\mu$m [80 bis 5 $m^2$/lg (nach BET)] aufweist,

und/oder

B2) 0,1 bis 15 Gew.-Teilen ultrafeinem Bariumsulfat, hergestellt duch Zusammenbringen getrennter wäßriger Lösungen, die jeweils äquivalente Mengen Bariumionen und Sulfationen enthalten, und Abtrennen des Präzipitats, wobei man zur Herstellung von gefälltem Bariumsulfat mit einer Primärkorngröße von <0,1 $\mu$m in einem geschlossenen Reaktor die wäßrigen Lösungen der Reaktanden kontinuierlich in Teilvolumina hoher Anzahl zerlegt, diese zu diskreten Fällvolumina einer mittleren Volumengröße von <1 $\mu$l vereinigt und die gebildete Suspension des Präzipitats kontinuierlich aus dem Reaktor abführt,

C) 1 bis 35 Gew.-Teilen eines teilchenförmigen Pfropfpolymerisats aus 35 bis 95 Gew.-Teilen einer zumindest teilvernetzten Kautschukgrundlage aus Olefin-, Dien-, Acrylat- und/oder Silikonkautschuken, bepfropft mit 5 bis 65 Gew.-Teilen Vinylmonomeren vom Typ der Styrole, $\alpha$-Methylstyrole, Acrylnitril, Methacrylnitril, $C_1$-$C_8$-Alkyl(meth)acrylat, $C_1$-$C_4$-Carbonsäurevinylester, Maleinsäureanhydrid, Maleinsäureimide, Maleinsäurehalbester, (Meth)Acrylsäureester mit reaktiven Gruppen im Alkoholrest oder Mischungen daraus

und gegebenenfalls

D) 0,1 bis 50 Gew.-Teilen, bezogen auf die Komponenten A), B) und C), Füll- und/oder Verstärkungsmittel.

Bevorzugt sind thermoplastische Formmassen, die die Komponente A) zu 94,9 bis 15 Gew.-Teilen, die Komponenten B1) und/oder B2) zu 0,1 bis 10 Gew.-Teilen, die Komponente C) zu 5 bis 30 Gew.-Teilen und gegebenenfalls die Komponente D) zu 0,1 bis 45 Gew.-Teilen enthalten.

Ganz besonders bevorzugt sind thermoplastische Formmassen, die die Komponente A) zu 20 bis 94,9 Gew.-Teilen, die Komponenten B1) und/oder B2) zu 0,1 bis 10 Gew.-Teilen, die Komponente C) zu 5 bis 30 Gew.-Teilen und gegebenenfalls die Komponente D) zu 0,1 bis 40 Gew.-Teilen enthalten.

Die oben angegebenen Gew.-Teile der Komponenten A) bis D) sollen sich in der Summe zu 100 Gew.-Teilen ergänzen.

Die als Komponente A) einzusetzenden Polyalkylenterephthalate lassen sich aus Terephthalsäure (oder ihren reaktionsfähigen Derivaten) und aliphatischen Diolen mit 2 bis 10 Kohlenstoffatomen nach bekannten Methoden herstellen (Kunststoff-Handbuch, Band VIII, Seite 695 fcf, Carl-Hanser-Verlag, München 1983).

Bevorzugte Polyalkylenterephthalate enthalten mindestens 90 Mol -%, bezogen auf die Dicarbonsäurekomponente, Terephthalsäurereste und mindestens 80, vorzugsweise mindestens 90 Mol-%, bezogen auf die Diolkomponente, Ethylenglykol- und/oder Butandiol-1,4-Reste.

Die bevorzugten Polyalkylenterephthalate können neben Terephthalsäureresten bis zu 20 Mol-% Reste anderer aromatischer oder cycloaliphatischer Dicarbonsäuren mit 8 bis 14 C-Atomen und/oder aliphatischer Dicarbonsäuren mit 4 bis 12 C-Atomen enthalten, wie Reste von Phthalsäure, Isophthalsäure, Naphthalin-2,6-dicarbonsäure, 4,4-Diphenyldicarbonsäure, Bernstein-, Adipin-, Sebacinsäure, Cyclohexandiessigsäure.

Die bevorzugten Polyalkylenterephthalate können neben Ethylenglykol- oder Butandiol-1,4-Resten bis zu 20 Mol-% anderer aliphatischer Diole mit 3 bis 21 C-Atomen oder cycloaliphatischer Diole mit 6 bis 21

C-Atomen enthalten, z.B. Reste von Propandiol-1,3, 2-Ethylpropandiol-1,3, Neopentylglykol, Pentandiol-1,5, Hexandiol-1,6, Cyclohexandimethanol-1,4, 3-Methylpentandiol-2,4, 2-Methylpentandiol-2,4, 2,2,4-Trimethylpentandiol-1,3 und -1,6, 2-Ethylhexandiol-1,3, 2,2-Diethylpropandiol-1,3, Hexandiol-2,5, 1,4-Di-(β-hydroxyethoxy)-benzol, 2,2-Bis(4-hydroxycyclohexyl)-propan, 2,4-Dihydroxy-1,1,3,3-tetramethyl-cyclobutan, 2,2-Bis-(3-β-hydroxyethoxyphenyl)propan und 2,2-Bis-(4-hydroxypropoxy-phenyl)-propan (s. DE-OS 24 07 674, 24 07 776, 27 15 932).

Die Polyalkylenterephthalate können durch Einbau relativ kleiner Mengen 3- oder 4-wertiger Alkohole oder 3- oder 4-basischer Carbonsäuren, wie sie z.B. in der DE-OS 19 00 270 und US-PS 36 92 744 beschrieben sind, verzweigt werden. Beispiele bevorzugter Verzweigungsmittel sind Trimesinsäure, Trimellithsäure, Trimethylolethan und -propan und Pentaerythrit. Es ist ratsam, nicht mehr als 1 Mol-% des Verzweigungsmittels, bezogen auf die Säurekomponente, zu verwenden.

Besonders bevorzugt sind Polyalkylenterephthalate, die allein aus Terephthalsäure oder deren reaktionsfähigen Derivaten (z.B. deren Dialkylestern) und Ethylenglykol hergestellt worden sind.

Die vorzugsweise verwendeten Polyethylenterephthalate besitzen im allgemeinen eine Intrinsic-Viskosität von 0,4 bis 1,5 dl/g, vorzugsweise 0,5 bis 0,9 dl/g, die verwendeten Polybutylenterephthalate besitzen im allgemeinen eine Intrinsic-Viskosität von 0,7 bis 1,6 dl/g, vorzugsweise 0,8 bis 1,3 dl/g, insbesondere 0,8 bis 1,05 dl/g, jeweils gemessen in Phenol/o-Dichlorbenzol (1:1 Gew.-Teile) bei 25 °C.

Als Komponente B1) der erfindungsgemäßen thermoplastischen Formmassen kann eingesetzt werden Bariumsulfat mit chemoreaktiver Oberfläche hergestellt durch Fällung von Bariumionen mittels Sulfationen in wäßrigem Medium in Gegenwart von zusätzlichen mit Bariumionen fällbaren und schwer lösliche Bariumverbindungen bildenden Anionen wasserlöslicher Verbindungen, wobei das erhaltene chemoreaktive Bariumsulfat Korngrößen von <0,1 µm, bevorzugt 0,09 bis 0,01 µm [80 bis 5 $m^2/g$, bevorzugt 50 bis 10 $m^2/g$, (nach BET)] aufweist (s. DE-OS 3 718 277 und deutsche Patentanmeldung P 3 810 423.7).

Das beim Ausfällen von Bariumsulfat in Gegenwart von Anionen, die mit Bariumionen schwer lösliche Verbindungen bilden, entsprechender Konzentrationen erhaltene Produkt, enthält die Fremdionen entweder homogen über den Kristall verteilt oder diese an der Oberfläche angereichert.

Je nach Ladungsdichte und Molekülgröße der Anionen- bzw. Dotierungskomponenten werden Fehlstellen im $BaSO_4$-Kristallgitter besetzt bzw. Gitterplätze in statistischer Verteilung eingenommen oder es erfolgt mit langen apolaren Molekülresten eine Abschirmung der Oberflächenladung (Hydrophobierung).

Gemäß dem Verfahren können Anionen wasserlöslicher organischer oder anorganischer Verbindungen eingesetzt werden. In manchen Fällen kann es auch zweckmäßig sein, Gemische dieser Verbindungen zu verwenden.

Zur Durchführung des Verfahrens werden diese zusätzlichen Komponenten zweckmäßig der wäßrigen Lösung zugesetzt, welche die anorganische Sulfatkomponente, wie Alkalisulfat, enthält. Die zusätzliche Komponente wird in einer Menge von 0,1 bis 50 Gew.-%, bezogen auf das zu fällende Bariumsulfat, verwendet. Vorzugsweise wird die zusätzliche Komponente in einer Menge von 1 bis 10 Gew.-% eingesetzt.

Geeignete organische wasserlösliche Verbindungen für das Verfahren sind Verbindungen aus der Gruppe Alkyl- und Arylsulfonate, Alkyl- und Arylsulfate oder Alkyl- und Arylphosphorsäureester, wobei der Alkyl- oder Arylrest gegebenenfalls durch funktionelle Gruppen teilweise substituiert sein kann, oder perfluorierte Alkyl- und Arylsulfonate. Beispielsweise werden in dem Verfahren der Erfindung eingesetzt:
Natriumdodecylbenzolsulfonat
Natriumlaurylsulfat
Natriumcetylsulfat
Phosphorsäuremonoethylmonobenzylester
Lithiumperfluoroctansulfonat.

Als Verbindungen, die mit funktionellen Gruppen substituierte Alkyl- oder Arylreste tragen, eignen sich solche mit Halogen, Hydroxyl-, Amino-, Imino-, Mercapto-, Carboxyl- oder Alkoxycarbonyl-Gruppen oder einer endständigen Doppelbindung, beispielsweise
12-Brom-1-dodecansulfonsäure
Natrium-10-hydroxy-1-decansulfonat
Natrium-Carrageenan
Natrium-10-Mercapto-1-Cetansulfonat
Natrium-16-Ceten(1)sulfat.

In dem Verfahren zur Herstellung von chemoreaktivem Bariumsulfat werden als Anionen wasserlöslicher anorganischer Verbindungen (andere anorganische Verbindungen als Sulfate) anorganische Verbindungen aus der Gruppe Thiosulfat, Silikat, Fluorid, Fluorsilikat, Monofluorphosphat oder Wolframat eingesetzt. Geeignete Verbindungen sind beispielsweise
Natriumthiosulfat ($Na_2S_2O_3 \cdot 5\ H_2O$)

Natriummetasilikat ($Na_2SiO_3$)
Natriumfluorid (NaF)
Lithiumhexafluorosilikat ($Li_2(SiF_6) \cdot 2\ H_2O$)
Natriumfluorophosphat ($Na_2PO_3F$)
Natriumpolywolframat ($3\ Na_2WO_4 \cdot 9\ WO_3 \cdot H_2O$).

Die nach dem Verfahren hergestellten chemoreaktiven Bariumsulfat-Pigmente können eine für den vorgesehenen Verwendungszweck geeignete Nachbehandlung erfahren.

Sind der Bariumsulfatoberfläche z.B. durch die Dotierungskomponenten saure bzw. veresterbare Hydroxylgruppen, wie

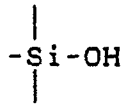, 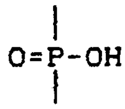 oder 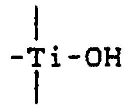,

aufgeprägt oder befinden sich in der Kristallitoberfläche neben den $(SO_4)^{2-}$-Anionen durch Copräzipitation eingebrachte, andere chemisch umsetzbare Gruppen, wie $S^{2-}$, $SH^-$ oder $F^-$, so kann dieses $BaSO_4$-Pigment mit geeigneten Nachbehandlungskomponenten bzw. Kupplungsmitteln für das jeweilige Einsatzgebiet ausgerüstet werden. Ein im allgemeinen eingesetzter Haftvermittler bzw. Kupplungsmittel sind organofunktionelle Alkoxysilane, wie Vinyltrimethoxysilan. Es werden aber auch Alkoxytitanate, -zirkonate oder -aluminate eingesetzt. Das Aufbringen des Haftvermittlers erfolgt auf an sich bekannte Weise. Er kann in einem Lösungsmittel gelöst auf das Pigment aufgebracht werden, wobei das Lösungsmittel abgezogen und der Feststoff getrocknet wird. Oder die Belegung erfolgt bei flüssigen Haftvermittlern durch Verdüsen des Mittels auf das im Mischbett bewegte Pigmentpulver.

Das als Komponente B2) der thermoplastischen Formmasse zuzusetzende ultrafeine Bariumsulfat wird hergestellt durch Zusammenbringen getrennter wäßriger Lösungen, die jeweils äquivalente Mengen Bariumion bzw. Sulfation enthalten, und Abtrennen des Präzipitats, wobei man zur Herstellung von gefälltem Bariumsulfat mit einer Primärkorngröße von <1 $\mu$m in einem geschlossenen Reaktor die wäßrigen Lösungen der Reaktanden kontinuierlich in Teilvolumina hoher Anzahl zerlegt, diese zu diskreten Fällvolumina einer mittleren Volumengröße von <1 $\mu$l vereinigt und die gebildete Suspension des Präzipitats kontinuierlich aus dem Reaktor abführt. In der wäßrigen Lösung des Sulfations kann auch ein weiteres Anion wasserlöslicher anorganischer oder organischer Verbindung enthalten sein, das schwerlösliche Bariumverbindungen bildet (vergl. DE-OS 3 703 377 und deutsche Patentanmeldung P 3 810 423.7).

Nach dem Verfahren werden somit kleine Teilvolumina der Reaktionslösungen in hoher Anzahl, beispielsweise mehr als $10^6$ pro sec, zusammengebracht und in einem Reaktionsvolumen einer mittleren Volumengröße von <1 $\mu$l die Fällung rasch und vollständig herbeigeführt.

Zur Durchführung des Verfahrens werden die jeweiligen wäßrigen Lösungen der Reaktanden kontinuierlich jeweils in Tropfenform einer mittleren Tropfengröße von <0,5 $\mu$l rasch zusammengebracht und in einem Fällvolumen einer mittleren Volumengröße von <1 $\mu$l vereinigt.

Nach einer weiteren Ausgestaltung der Verfahrens überführt man die wäßrige Lösung des einen Reaktanden kontinuierlich in eine Tropfenform einer mittleren Tropfengröße von <0,5 $\mu$l und bringt diese Tropfen kontinuierlich in einen fließenden Film der wäßrigen Lösung des anderen Reaktanden ein.

Das heißt mit anderen Worten, es werden Tröpfchen der wäßrigen Lösung des einen Reaktanden mit Tröpfchen des anderen Reaktanden mit hoher Geschwindigkeit zusammengebracht, oder es werden die Tröpfchen der wäßrigen Lösung des einen Reaktanden in den fließenden Film der wäßrigen Lösung des anderen Reaktanden mit hoher Geschwindigkeit eingeschleudert, beispielsweise die Tröpf chen einer wäßrigen Bariumchloridlösung in den Rieselfilm einer wäßrigen Natriumsulfatlösung.

Das Verfahren wird zweckmäßig in einem vertikalen, zylinderförmigen geschlossenen Reaktor durchgeführt. Der Reaktor weist hierbei in seinem Kopfteil an sich bekannte Mittel bzw. Vorrichtungen zur Zerteilung von wäßrigen Komponentenlösungen in feinste Tröpfchen auf, wie auch Mittel zur Erzeugung eines Rieselfilms aus wäßrigen Komponentenlösungen. In seinem Bodenteil ist ein derartiger Reaktor zweckmäßig konisch gestaltet und mit Abzugseinrichtungen für das Reaktionsgemisch bzw. für die Fällungssuspension versehen.

Die Tropfenform der Reaktionslösung kann im Kopfteil des zylindrischen Reaktors durch Zerstäubung der Lösung unter Druck, beispielsweise Düsen, oder durch Einwirkung von Zentrifugalkraft auf die Lösung erzeugt werden, beispielsweise Zerstäuberscheiben. Die Tröpfchen haben eine Größe von <0,5, vorzugsweise von 0,001 bis 0,25 $\mu$l. Der Rieselfilm an der Innenwand des Reaktors wird in einer Dicke von 1 bis 10

mm erzeugt.

Die Tröpfchenströme der wäßrigen Lösungen können diametral oder in einem Winkel gegeneinander gerichtet werden. Die Tröpfchenströme können des weiteren aber auch parallel in gleicher Richtung im Reaktor geführt und zur gegenseitigen Durchdringung und Fällung gebracht werden.

Der an der Reaktorwandung ablaufende Film der Fällungssuspension wird im unteren Teil des Reaktors gesammelt und über eine Dosiervorrichtung aus dem Reaktor ausgetragen und auf den Feststoff, wie ultrafeines Bariumsulfat einer Primärkorngröße unter 0,1 $\mu$, bevorzugt 0,09 bis 0,01 $\mu$ [Oberfläche (BET): 80 bis 5 $m^2/g$, bevorzugt 40 bis 10 $m^2$ /g] aufgearbeitet.

Das Bariumsulfat mit chemoreaktiver Oberfläche und/oder das ultrafeine Bariumsulfat kann den anderen Komponenten der Formmasse in üblicher Weise zugemischt werden. Bevorzugt ist jedoch der Zusatz des Bariumsulfats zur Komponente A). Man kann beispielsweise das Bariumsulfat dem Polyethylenterephthalat in Form einer Aufschlämmung im entsprechenden Diol von Beginn der Polyesterbildung an zusetzen. Es ist aber auch möglich das Bariumsulfat in Form eines hochkonzentrierten Compounds zu der Schmelzcompoundierung zuzugeben.

Die als Komponente C) zu verwendenden teilchenförmigen Pfropfpolymerisate bestehen aus 35 bis 95 Gew.-Teilen, bevorzugt 50 bis 90 Gew.-Teilen einer zumindest teilvernetzten Kautschukgrundlage aus Olefin-, Dien-, Acrylat-und/oder Silikonkautschuken, bepfropft mit 5 bis 65 Gew.-Teilen, bevorzugt 10 bis 50 Gew.-Teilen Vinylmonomeren vom Typ der Styrole; $\alpha$-Methylstyrole, Acrylnitril, Methacrylnitril, $C_1$-$C_8$-Alkyl-(meth)acrylate, $C_1$-$C_4$-Carbonsäurevinylester, Maleinsäureanhydrid, Maleinsäureimide, Maleinsäurehalbester, (Meth)Acrylsäureester mit reaktiven Gruppen im Alkoholrest, wie Hydroxy-, Carboxy- oder Epoxygruppen (wie z.B. Hydroxyethylmeth acrylat oder Glycidylmethacrylat) oder Mischungen daraus mit mittleren Teilchendurchmessern ($d_{50}$-Werte) von 60 bis 800 nm, bevorzugt 80 bis 600 nm.

Die Kautschukgrundlagen zur Herstellung der Komponente C) sind zumindest teilvernetzt und besitzen Gelgehalte >30 Gew.-%, bevorzugt 60 bis 99 Gew.-%, insbesondere 75 bis 95 Gew.-%.

Der Gelgehalt der Kautschukgrundlage wird bei 25 °C in Dimethylformamid bestimmt (M. Hoffmann, H. Krömer, R. Kuhn, Polymeranalytik I und II, Georg-Thieme-Verlag Stuttgart 1977).

Die Olefinkautschuke zur Herstellung der Komponente C) sind Copolymerisate des Ethylens, beispielsweise mit Propylen oder längerkettigen Olefinen, Acrylnitril, Vinylacetat, $C_1$-$C_8$-(Meth)Acrylsäureester, Kohlenmonoxid, Diolefinen oder Mischungen daraus.

Als Dienkautschukgrundlagen zur Herstellung von C) sind Homo- und/oder Copolymerisate des 1,3-Butadiens und/oder Isoprens zu verwenden, die bis zu 30 Gew.-% einpolymerisierte Monomere vom Typ der Styrole, $C_1$-$C_8$-(Meth)Acrylsäureester oder Acrylnitril enthalten können. Bevorzugt sind Homopolymerisate des 1,3-Butadiens.

Als Acrylatkautschuke werden (Co)Polymerisate von Acrylsäurealkylestern eingesetzt, die bis zu 30 Gew.-% wei tere Monomere einpolymerisiert enthalten können. Zu den bevorzugten polymerisierbaren Acrylsäureestern gehören $C_1$-$C_8$-Alkylester, beispielsweise Methyl-, Ethyl-, Butyl-, Octyl- und 2-Ethylhexylester und Halogenalkylester, vorzugsweise Halogen-$C_1$-$C_8$-alkylester, wie Chlorethylacrylat. Sie können einzeln oder in Mischung eingesetzt werden.

Zur Vernetzung der Acrylatkautschuke können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und gesättigter einwertiger Alkohole mit 3 bis 12 C-Atomen oder gesättigter Polyole mit 2 bis 4 OH-Gruppen und 2 bis 20 C-Atomen, wie Ethylenglykoldimethacrylat, Allylmethacrylat; mehrfach ungesättigte heterocyclische Verbindungen, wie Trivinyl- und Triallylcyanurat und -isocyanurat, Tri-acryloyl-s-triazine, insbesondere Triallylcyanurat; polyfunktionelle Vinylverbindungen, wie Di- und Trivinylbenzol, aber auch Trialkylphosphat und Diallylphthalat.

Bevorzugte vernetzende Monomere sind Allylmethacrylat, Ethylenglykoldimethacrylat, Diallylphthalat und heterocyclische Verbindungen, die mindestens drei ethylenisch ungesättigte Gruppen aufweisen.

Besonders bevorzugte vernetzende Monomere sind die cyclischen Monomere Triallylcyanurat, Triallylisocyanurat, Trivinylcyanurat, Triacryloylhexahydro-s-triazin und Triallylbenzole.

Die Menge der vernetzenden Monomere beträgt vorzugsweise 0,02 bis 5, insbesondere 0,05 bis 2 Gew.-%, bezogen auf die Kautschukgrundlage.

Bei cyclischen vernetzenden Monomeren mit mindestens 3 ethylenisch ungesättigten Gruppen ist es vorteilhaft, die Menge auf 1 Gew.-% der Kautschukgrundlage zu beschränken.

Bevorzugte "andere" polymerisierbare, ethylenisch ungesättigte Monomere, die neben den Acrylsäureestern gegebenenfalls zur Herstellung der Acrylatkautschukgrundlage dienen können, sind z.B. Acrylnitril, Styrol, $\alpha$-Methylstyrol, Acrylamide, Vinyl-$C_1$-$C_6$-alkylether, Butadien, Isopren.

Die Acrylatkautschukgrundlagen können auch Produkte sein, die einen vernetzten Dienkautschuk aus einem oder mehreren konjugierten Dienen, wie Polybutadien, oder ein Copolymerisat eines konjugierten

Diens mit einem ethylenisch ungesättigten Monomer, wie Styrol und/oder Acrylnitril, als Kern enthalten. Der Anteil des Polydien-Kerns in der Acrylatkautschukgrundlage kann 0,1 bis 80, bevorzugt 10 bis 50 Gew.-%, bezogen auf die Acrylatkautschukgrundlage, betragen.

Besonders bevorzugte Kautschukgrundlagen für die Pfropfpolymerisate C) auf Basis von Polyacrylsäureestern seien nachfclgend zusammengefaßt:

1. Acrylsäureesterpolymerisate und -copolymerisate ohne Dienkautschukkern und
2. Acrylsäureesterpolymerisate und -copolymerisate, die einen Dienkautschukkern enthalten.

Die Silikonkautschukgrundlagen sind vernetzte Silikonkautschuke und enthalten Einheiten der Formeln (I) bis (IV).

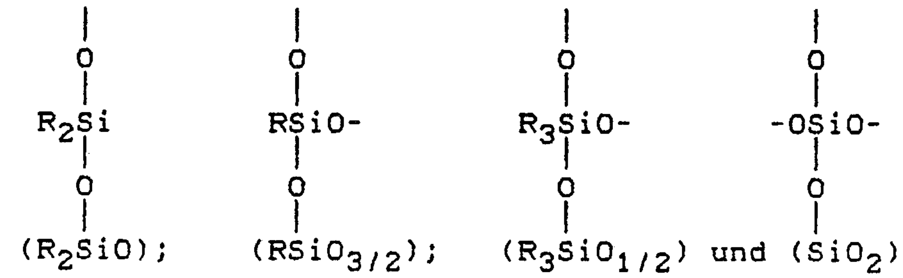

und

(I), (II), (III), (IV)

in welchen

R einen einwertigen organischen Rest darstellt.

Als einwertige organische Reste sind $C_1$-$C_{40}$-organische Reste genannt, beispielsweise Alkylgruppen, vorzugsweise $C_1$-$C_{10}$-Alkyl, Arylgruppen, vorzugsweise $C_6$-$C_{24}$-Aryl, Alkylarylgruppen, vorzugsweise $C_7$-$C_{30}$-Alkylaryl, Arylalkylgruppen, vorzugsweise $C_7$-$C_{30}$-Aralkyl, $C_1$-$C_{20}$-Alkoxy, $C_1$-$C_{20}$-Thioalkyl sowie ungesättigte $C_2$-$C_{20}$-organische Reste.

Besonders bevorzugt seien genannt: Methyl, Ethyl, tert.-Butyl, Phenyl, Methylphenyl, Bisphenyl, Phenylmethyl. Weiterhin seien genannt $C_1$-$C_{10}$-Alkoxy-Reste, radikalisch angreifbare Gruppen, wie Vinyl- oder $\gamma$-Mercaptopropylreste.

Bevorzugt sind mindestens 80 % aller Reste R Methyl; insbesondere bevorzugt sind Kombinationen aus Methyl und Ethyl.

Auf 100 Mol Einheiten der Formel $R_2SiO$ kommen vorzugsweise 0 bis 10 Mol Einheiten der Formel $RSiO_{3/2}$, 0 bis 1,5 Mol Einheiten $R_3SiO_{1/2}$ und 0 bis 3 Mol Einheiten der Formel $SiO_2$.

Bevorzugte Silikonkautschukgrundlagen enthalten eingebaute Einheiten radikalisch angreifbarer Gruppen. Diese sind zur Radikaladdition oder Übertragungsreaktion befähigt. Solche Gruppen sind vorzugsweise Vinyl-, Allyl-, Chlor-, Mercaptogruppen, vorzugsweise in Mengen von 2 bis 10 Mol-%, bezogen auf die Reste R.

Die Silikonkautschukgrundlagen können auch ein Kern/Mantelsystem darstellen mit einem Silikonkautschukkern und einem Mantel (oder einer Hülle) aus vernetztem Alkylacrylatkautschuk.

Diese Hülle ist insbesondere ein vernetztes (Pfropf)-Polymerisat (überwiegend Pfropfpolymerisat) aus Acrylsäurealkylestern, gegebenenfalls in Mischung mit bis zu 40 Gew.-% anderen Vinylmonomeren. Zu den geeigneten polymerisierbaren Acrylsäureestern gehören $C_{1-8}$-Alkylester, beispielsweise Methyl-, Ethyl-, Butyl-, Octyl-und 2-Ethylhexylester und Halogenalkylester, bevorzugt $C_{1-8}$-Halogenalkylester, wie Chlorethylacrylat.

Sie können einzeln oder in Mischung eingesetzt werden, wobei im Falle einer Mischung mindestens ein Alkylester im Gemisch vorhanden sein soll. Zur Vernetzung werden zwei- oder mehrfunktionelle Monomere ("polyfunktionelle" Monomere) copolymerisiert.

Beispiele sind Ester von ungesättigten Carbonsäuren mit einem Polyol (vorzugsweise 2 bis 20 Kohlenstoffatome in der Estergruppe), wie Ethylglykoldimethacrylat, Ester einer mehrbasischen Carbonsäure mit einem ungesättigten Alkohol (vorzugsweise 8 bis 30 Kohlenstoffatome im Esterrest), wie Triallylcyanurat, Triallylisocyanurat; Divinylverbindungen wie Divinylbenzol; Ester ungesättigter Carbonsäuren mit ungesättigten Alkoholen (bevorzugt 6 bis 12 Kohlenstoffatome im Esterrest), wie Allylmethacrylat; Phosphorsäureester, beispielsweise Triallylphosphat und 1,3,5-Triacryloylhexahydro-s-triazin, Alkylenbisacrylamide usw.

Besonders bevorzugte polyfunktionelle Monomere sind Triallylcyanurat und Triallylisocyanurat. Die

Menge der zur Vernetzung eingesetzten polyfunktionellen Monomere ist bevorzugt 0,05 bis 5,0 Gew.-% der Masse der Hülle.

Der Silikonkautschukkern wird in eine Emulsion gebracht oder in Emulsion hergestellt. Dabei wird z.B. ein langkettiges, OH-terminiertes Silikonöl durch Emulsionspolymerisation (z.B. US-A-2 891 910, GB-A-1 024 024) in Gegenwart einer Alkylbenzolsulfonsäure oder n-Alkylsulfonsäure polymerisiert, gegebenenfalls in Gegenwart von weiteren Emulgiermitteln und Co-Emulgatoren. Nach er folgter Polymerisation wird die Säure neutralisiert. Die Emulgiermittelkonzentration kann gering gehalten werden. Die hergestellte Emulsion hat wenig störende Fremdmoleküle (z.B. aus dem Katalysator) in dem fertigen Produkt.

Im allgemeinen sind solche Silikonöle, die durch Emulsionspolymerisation in Anwesenheit von nichtionogenen Co-Emulgatoren entstanden sind, von niedrigerem Molekulargewicht als solche, bei denen kein Co-Emulgator verwendet wurde. Eine Steuerung des Molekulargewichtes des bei der Emulsionspolymerisation entstehenden OH-terminierten Silikonöls erfolgt z.B. weiterhin über die Temperatur bei der Gleichgewichtsbildung zwischen Siloxan, Wasser und dem durch Ringöffnung des Siloxans zunächst gebildeten Silanöl.

Der Einbau von radikalisch angreifbaren Gruppen in das bevorzugte Silikoncopolymer kann durch Umsetzung in Anwesenheit geeigneter Siloxanoligomerer erfolgen. Geeignete Ausgangsoligomere sind z.B. Tetramethyltetravinylcyclotetrasiloxan, $\gamma$-Mercaptopropylmethyldimethoxysilan oder dessen Hydrolysat.

Diese funktionellen Oligomere können dem Basisoligomer zur Copolymerisation, Octamethylcyclotetrasiloxan in der gewünschten Menge beigefügt werden.

Analog kann auch der Einbau längerkettiger Alkylreste R, wie z.B. Ethyl-, Propyl-, oder dergleichen, bzw. der Einbau von Phenylgruppen erreicht werden.

Die Vernetzung der Silikonkautschukgrundlagen kann stattfinden, indem z.B. die bevorzugten eingesetzten Vinyl- und Mercaptopropylgruppen bei der Emulsionspolymerisation der Silikonbestandteile miteinander reagieren, so daß die Zugabe eines externen Vernetzers nicht erforderlich sein kann. Gegebenenfalls kann ein Vernetzung bewirkendes Silan zugefügt werden, um den Vernetzungsgrad des Silikonkautschuks zu erhöhen.

Der Einbau von Verzweigungen oder Vernetzungen kann durch Zugabe von z.B. Tetraethoxysilan oder eines Silans der allgemeinen Formel $RS_iX_3$, wobei X eine hydrolysierbare Gruppe (z.B. ein Alkoxyrest) ist, erfolgen. R hat die im vorhergehenden beschriebene Bedeutung. Bevorzugt steht R für Methyl, Phenyl. Insbesondere bevorzugt sind neben Tetraethoxysilan, Methyltrimethoxysilan oder Phenyltrimethoxysilan.

Zur Herstellung der als Komponente C) geeigneten Pfropfpolymerisate werden die Kautschukgrundlagen nach üblichen Methoden bepfropft. Bevorzugt sind Emulsionspfropfpolymerisate bei denen die Pfropfung auf eine Emulsion der obengenannten Kautschukgrundlagen stattfindet. Bevorzugte Pfropfmonomere sind Styrol, $\alpha$-Methylstyrol, Acrylnitril, Methylmethacrylat, $C_1$-$C_4$-Alkylacrylat bzw. Mischungen daraus; insbesondere bevorzugt sind Styrol und Acrylnitril in Gewichtsverhältnissen von 90:10 bis 60:40 oder Methylmethacrylat mit bis 30 Gew.-% Butylacrylat. [Zur Messung des Teilchendurchmessers siehe W. Scholtan und H. Lange, Kolloid-Zeitschrift für Polymere, 250 (1972), S. 787-796.]

Bei der Pfropfpolymerisation mit harzbildenden Monomeren zur Herstellung unvernetzter Pfropfhüllen bilden sich im allgemeinen neben dem Pfropfpolymerisat in bestimmtem Ausmaß freie unvernetzte Polymerisate aus diesen Monomeren. Die Menge dieses ungepfropften Polymerisats kann durch den Pfropfgrad bzw. die Pfropfausbeute charakterisiert werden. Sie hängt ab u.a. von den Polymerisationsbedingungen, der Zusammensetzung der Pfropfgrundlage und der Größe der zu pfropfenden Teilchen. Die Pfropfausbeute läßt sich durch Verfahrensmaßnahmen bekannter Art in weiten Bereichen variieren.

Die gegebenenfalls als Komponente D) zu verwendenden Zusätze, wie z.B. Füll- und Verstärkungsmittel sind Glasfasern oder mineralische Füllstoffe, wie Kaolin, Talkum, Glimmer, Quarzmehl, Gesteinsmehl, Erdalkalimetallcarbonate, Erdalkalimetalloxide, Titandioxid und/oder Zinksulfid und/oder übliche Flammschutzmittel sowie Farbstoffe. Dabei handelt es sich um kommerziell erhältliche Produkte.

Die Glasfasern haben in der Formmasse im allgemeinen eine mittlere Länge von 0,1 bis 0,5 mm, vorzugsweise von 0,1 bis 0,4 mm und einen Durchmesser im Bereich von 6 bis 20 µm. Besonders bevorzugt sind Glasfasern aus E-Glas. Zur Erzielung einer besseren Haftung können die Glasfasern mit Organosilanen, Epoxysilanen oder anderen Polymerüberzügen beschichtet sein. Die eingesetzten mi neralischen Füllstoffe besitzen mittlere Teilchendurchmesser von weniger als 20 µm, bevorzugt weniger als 10 µm, insbesondere 2 bis 8 µm.

Gegebenenfalls enthalten die erfindungsgemäßen Formmassen weiterhin 0,01 bis 5 Gew.-%, insbesondere 1 bis 2 Gew.-%, bezogen auf A) + B) + C) + gegebenenfalls D) eines Tetrafluorethylenpolymerisats.

Bevorzugt wird das Polytetrafluorethylen in Kombination mit den Pfropfkautschuken in die Formmasse eingebracht, wie in der EP-A-166 187 beschrieben.

Bei den fluorhaltigen Ethylenpolymerisaten, die homogen in der Formmasse verteilt vorliegen, handelt

es sich um Polymerisate des Ethylens mit einem Fluorgehalt von etwa 55 bis 76 Gew.-%, vorzugsweise 70 bis 76 Gew.-%. Beispiele hierfür sind Polytetrafluorethylen (PTFE), Tetrafluorethylen-Hexafluorethylen-Copolymere oder Tetrafluorethylen-Copolymerisate mit kleineren Anteilen (in der Regel bis zu 50 Gew.-%) copolymerisierter, ethylenisch ungesättigter Monomere. Diese werden zum Beispiel von Schildknecht in "Vinyl Interscience, Related Polymers", Wiley-Verlag, 1952, Seiten 484 bis 494 und von Wall in "Fluorpolymers" (Wiley Interscience, 1972) beschrieben. Wesentlich ist, daß das fluorhaltige Ethylenpolymerisat homogen verteilt in der Formmasse vorliegt und eine Teilchengröße $d_{50}$ (Zahlenmittelwert) im Bereich von 0,05 bis 10, vorzugsweise von 0,1 bis 5 µm, aufweist.

Neben den Komponenten A, B und C und gegebenenfalls der Komponente D können die erfindungsgemäßen Formmassen übliche Zusatzstoffe und Verarbeitungshilfsmittel enthalten.

Übliche Zusatzstoffe sind beispielsweise Stabilisatoren und Oxidationsverzögerer, Mittel gegen Wärmezersetzung und Zersetzung durch ultraviolettes Licht, Gleit- und Entformungsmittel, Färbemittel, wie Farbstoffe und Pigmente, pulverförmige Füll- und Verstärkungsmittel, Weichmacher. Solche Zusatzstoffe werden in den üblichen wirksamen Mengen eingesetzt.

Die Stabilisatoren können den Massen in jedem Stadium der Herstellung der thermoplastischen Massen zugesetzt werden. Vorzugsweise werden die Stabilisatoren zu einem frühen Zeitpunkt zugesetzt, um zu verhindern, daß die Zersetzung bereits beginnt, bevor die Masse geschützt werden kann. Solche Stabilisatoren müssen mit der Masse verträglich sein.

Als Entformungsmittel können alle bekannten Produkte, wie Esterwachse (z.B. Montanwachs), Fluortenside, Amidwachs wie Rhenax und/oder Oligoethylene verwendet werden. Als Weichmacher kommen z.B. aliphatische oligomere Polyester in Frage (siehe EP 29 931 und DE 27 06 128).

Die Verarbeitungshilfsmittel können in Mengen von 0,1 bis 10 Gew.-%, bevorzugt 0,3 bis 5 Gew.-%, besonders bevorzugt von 0,4 bis 2 Gew.-%, den Polyestern zugesetzt werden.

Die Herstellung der erfindungsgemäßen Mischungen kann in den üblichen Mischaggregaten, wie Walzen, Knetern, Ein- und Mehrwellenextrudern, erfolgen. Die Verarbeitungshilfsmittel können als Konzentrate in thermoplastischem Polyester in Granulatform oder als Pulvermischung bei der Compoundierung der Komponenten zudosiert werden. Die Temperaturfahrweise entspricht den für Polyester üblichen Bedingungen.

Die erfindungsgemäß einzusetzenden Komponenten können ohne vorherige Schmelzcompoundierung als physikalisches Gemenge direkt z.B. in konventionellen Spritzgußverfahren eingesetzt werden.

Das Herstellungsverfahren der Compounds kann sowohl diskontinuierlich als auch kontinuierlich unter Bedingungen durchgeführt werden, bei denen eine Oxidation weitgehend ausgeschlossen ist, d.h. unter Schutzgasatmosphäre. Als Schutzgas eignet sich z.B. Stickstoff, Kohlendioxid und/oder Argon.

Die Polymermischungen können gegebenenfalls einer thermischen Nachbehandlung von z.B. 100 bis 220 °C, bevorzugt 180 bis 210 °C, unterzogen werden.

Die thermoplastische Verarbeitung der erfindungsgemäßen Granulate zu Formkörpern erfolgt bei den üblichen Verarbeitungstemperaturen und Schmelzestandzeiten bis zu 9 Minuten (1 bis 9 Minuten). Bei den bevorzugten Polyesterformmassen werden Verarbeitungsbedingungen gewählt, bei denen die Massetemperaturen nicht höher als 320 °C und die Schmelzstandzeiten nicht höher als 9 Minuten sind.

Die erfindungsgemäßen Kunststofformmassen können eingesetzt werden bei der Herstellung von Formkörpern, Halbzeugen oder Filmen. Die daraus hergestellten Formkörper finden z.B. Anwendung im Automobilbereich.

## Beispiele

### 1. Pfropfkautschukkomponenten

1.1. Pfropfpolymerisat, hergestellt durch wäßrige Emulsionspfropfpolymerisation von 20 Gew.-Teilen einer Mischung aus 90 Gew.-Teilen Methylmethacrylat und 10 Gew.-Teilen Butylacrylat auf 80 Gew.-Teile einer Polybutadienkautschukgrundlage mit einem mittleren Teilchendurchmesser ($d_{50}$-Wert) von 380 nm und einem Gelgehalt von 92 Gew.-%.

1.2. Pfropfpolymerisat, hergestellt durch wäßrige Emulsionspfropfpolymerisation von 30 Gew.-Teilen einer Mischung aus 72 Gew.-Teilen Styrol und 28 Gew.-Teilen Acrylnitril auf 70 Gew.-Teile einer Acrylatkautschukgrundlage bestehend aus 0,8 Gew.-Teilen eines Polybutadienkerns und 99,2 Gew.-Teilen eines Mantels aus mit Triallylcyanurat vernetztem Butylacrylatpolymerisat mit einem mittleren Teilchendurchmesser von 480 nm ($d_{50}$-Wert) und einem Gelgehalt von 91 Gew.-%.

2. Polyethylenterenhthalat (PETP) mit 3 % $BaSO_4$:

a) Herstellung des Bariumsulfats mit chemoreaktiver Oberfläche gemäß Komponente B1):

a1) Zur Herstellung eines Bariumsulfats mit chemoreaktiver Oberfläche (entsprechend Komponente B1)) wurden in einer Fällzelle unter Rühren eine Bariumchlorid-Lösung mit einer Natriumsulfat-Lösung zur Reaktion gebracht. Vor der Umsetzung wurde die $Na_2SO_4$-Lösung (Dichte 1,088 g/ml) mit 7 g Natriumhydroxid pro Liter $Na_2SO_4$-Lösung alkalisch eingestellt und sodann mit 32 g $Na_2SiO_3$-Lösung (Dichte 1,346 g/ml) pro Liter Sulfatlösung versetzt. In der Vorriohtung wurden 105,7 ml/min $BaCl_2$-Lösung (Dichte 1,073 g/ml) und 896 ml/min der silikathaltigen $Na_2SO_4$-Lösung durchgesetzt. Der Niederschlag wurde abfiltriert, mehrmals mit Wasser gewaschen und bei 110 °C getrocknet. Die naßchemische Analyse des Trockenproduktes ergab einen $SiO_2$-Gehalt von 0,62 %. Die BET-Oberfläche des Produktes betrug 18,3 $m^2/g$.

b1) Zwecks Oberflächenmodifizierung eines nach a) hergestellten silikathaltigen Bariumsulfats mit einer Vinylgruppierung wurde dieses in wasserfreiem Isopropanol dispergiert (Feststoffgehalt 10 Gew.-%). Unter Rühren wurde eine 1 %ige Lösung von Vinyltrimethoxysilan in wasserfreiem Isopropanol in einer Menge zugetropft, daß in der Anschlämmung 0,5 Gew.-% des Silans, bezogen auf das Pigment, vorlagen. Die Dispersion wurde ca. 1 Stunde bei ca. 40 °C gerührt und dann abfiltriert. Das unverbrauchte physisorptiv gebundene Silan wurde anschließend mit wasserfreiem Isopropanol aus dem Feststoff ausgewaschen und letzterer getrocknet. Es fiel ein $BaSO_4$ an, auf dem IR-spektroskopisch die Vinylgruppierung nachgewiesen werden konnte.

c) Als PETP-Komponente wurde ein Polyethylenterephthalat der Intrinsic-Viskosität, gemessen in o-Dichlorbenzol/Phenol (1:1) bei 25 °C von 0,64 dl/g eingesetzt. Die Abmischung erfolgte in üblicher Weise mit Hilfe einer Schneckenmaschine.

3. Herstellung und Prüfung der erfindungsgemäßen und Vergleichsformmasen

Die in den Beispielen aufgeführten Komponenten werden auf einem Zweiwellenextruder bei einer Massetemperatur von 280 °C compoundiert und anschließend zu Formkörpern verspritzt (Formtemperatur 80 °C, bei Beispiel 3) 100 °C).

| Beispiel 1 | A | B |
|---|---|---|
| PETP T 86[1)] | 78,9 | - |
| PETP 3 % $BaSO_4$ | - | 78,9 |
| Kautschuk (1.1) und 7 Gew.-% Adimoll BO[2)] | 20 | 20 |
| übliche Additive[3)] | 1.1 | 1.1 |
| Vicat B [°C] | 96/97 | 128-132 |
| Biege-E-Modul [MPa] | 1600 | 1790 |

[1)] = Handelsprodukt der Fa. Hoechst AG
[2)] = Weichmacher, Handelsprodukt der Fa. Bayer AG
[3)] = Stabilisatoren, Entformungsmittel: Ester-Wachs: Microtalk MVR: Stabaxol (15 %ig) (0,4:0:0,7/Beispiel 1) (0,3:0,5:0,7/Beispiele 2 und 3)

| Beispiel 2 | A | B |
|---|---|---|
| PETP T 86[1] | 84,5 | - |
| PETP 3 % $BaSO_4$ | - | 84,5 |
| Kautschuk (1.2) | 14 | 14 |
| übliche Additive[3] | 1.5 | 1.5 |
| Vicat B | 107/8 | 144/5 |

[1] = Handelsprodukt der Fa. Hoechst Ag
[3] = Stabilisatoren, Entformungsmittel: Ester-Wachs: Microtalk MVR: Stabaxol (15 %ig) (0,4:0:0,7/Beispiel 1) (0,3:0,5:0,7/Beispiele 2 und 3)

| Beispiel 3 | A | B |
|---|---|---|
| PETP T 86[1] | 61 | - |
| PETP 3 % $BaSO_4$ | - | 61 |
| Kautschuk (1.2) | 17.5 | 17.5 |
| Glasfasern[4] | 20 | 20 |
| übliche Additive[3] | 1.5 | 1.5 |
| Vicat B [° C] | 174 | 190 |
| Biege-E-Modul [MPa] | 4700 | 5560 |

[1] = Handelsprodukt der Fa. Hoechst AG
[2] = Weichmacher, Handelsprodukt der Fa. Bayer AG
[3] = Stabilisatoren, Entformungsmittel: Ester-Wachs: Microtalk MVR: Stabaxol (15 %ig) (0,4:0:0,7/Beispiel 1) (0,3:0,5:0,7/Beispiele 2 und 3)
[4] = Fa. OCF, Typ 429 YZ

Die Beispiele 1 bis 3 dokumentieren, das im Vergleich zum Stand der Technik (immer Beispiel A), der Vicat-B-Wert sowie der Biege-E-Modul der erfindungsgemäßen Formmassen deutlich erhöht sind. Vicat-B-Wert (120) nach DIN 53 460, Biege-E-Modul nach DIN 53 457-B3 gemessen.

## Ansprüche

1. Thermoplastische Formmassen aus
A) 1 bis 99 Gew.-Teilen Polyalkylenterephthalat,
B1) 0,1 bis 15 Gew.-Teilen Bariumsulfat mit chemoreaktiver Oberfläche, hergestellt durch Fällung von Bariumionen mit Sulfationen im wäßrigen Medium in Gegenwart von zusätzlichen, mit Bariumionen fällbare und schwer lösliche Bariumverbindungen bildenden Anionen wasserlöslicher Verbindungen, wobei das erhaltene, gegebenenfalls mit Kupplungsmitteln nachbehandelte chemoreaktive Bariumsulfat Korngrößen von <0,1 µm [80 bis 5 $m^2$ /g (nach BET)] aufweist,
und/oder
B2) 0,1 bis 15 Gew.-Teilen ultrafeinem Bariumsulfat, hergestellt duch Zusammenbringen getrennter wäßriger Lösungen, die jeweils äquivalente Mengen Bariumionen und Sulfationen enthalten, und Abtrennen des Präzipitats, wobei man zur Herstellung von gefälltem Bariumsulfat mit einer Primärkorngröße von <0,1 µm in einem geschlossenen Reaktor die wäßrigen Lösungen der Reaktanden kontinuierlich in Teilvolumina hoher Anzahl zerlegt, diese zu diskreten Fällvolumina einer mittleren Volumengröße von <1 µl vereinigt und die gebildete Suspension des Präzipitats kontinuierlich aus dem Reaktor abführt,
C) 1 bis 35 Gew.-Teilen eines teilchenförmigen Pfropfpolymerisats aus 35 bis 95 Gew.-Teilen einer zumindest teilvernetzten Kautschukgrundlage aus Olefin-, Dien-, Acrylat- und/oder Silikonkautschuken, bepfropft mit 5 bis 65 Gew.-Teilen Vinylmonomeren vom Typ der Styrole, α-Methylstyrole, Acrylnitril, Methacrylnitril, $C_1$-$C_8$-Alkyl(meth)acrylat, $C_1$-$C_4$-Carbonsäurevinylester, Maleinsäureanhydrid, Maleinsäu-

reimide, Maleinsäurehalbester, (Meth)Acrylsäureester mit reaktiven Gruppen im Alkoholrest oder Mischungen daraus
und gegebenenfalls
D) 0,1 bis 50 Gew.-Teilen, bezogen auf die Komponenten A), B) und C), Füll- und/oder Verstärkungsmittel und/oder Flammschutzmittel
mit der Maßgabe, daß sich die Komponenten A) bis D) zu 100 Gew.-Teilen addieren.

2. Thermoplastische Formmassen nach Anspruch 1, dadurch gekennzeichnet, daß sie die Komponente A) zu 15 bis 94,9 Gew.-Teilen, die Komponente B1) und/oder B2) zu 0,1 bis 10 Gew.-Teilen, die Komponente C) zu 5 bis 30 Gew.-Teilen und gegebenenfalls die Komponente D) zu 0,1 bis 45 Gew.-Teilen enthalten.

3. Thermoplastische Formmassen nach Anspruch 1, dadurch gekennzeichnet, daß sie die Komponente A) zu 20 bis 94,9 Gew.-Teilen, die Komponente B1) und/oder B2) zu 0,1 bis 10 Gew.-Teilen, die Komponente C) zu 5 bis 30 Gew.-Teilen und gegebenenfalls die Komponente D) zu 0,1 bis 40 Gew.-Teilen enthalten.

4. Verwendung der Formmassen nach Ansprüchen 1 bis 3 zur Herstellung von Formkörpern, Halbzeugen und Folien.

Europäisches Patentamt

# EUROPÄISCHER RECHERCHENBERICHT

Nummer der Anmeldung

EP 90117447.4

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int Cl 5) |
| Y | DATABASE WPIL, Nr. 88-297 407, DERWENT PUBLICATIONS LTD., London, GB & JP-A-63-218 769 (MITSUI PETROCHEM. IND. K.K.) 12-09-1988 * Zusammenfassung * -- | 1-4 | C 08 L 67/02 C 08 K 3/30// (C 08 L 67/02 C 08 L 51:04) |
| Y | DATABASE WPIL, Nr. 88-165 809, DERWENT PUBLICATIONS LTD., London, GB & JP-A-63-105 059 (TOYOBO K.K.; NIPPON MAGFAN K.K.) 10-05-1988 * Zusammenfassung * -- | 1,4 | |
| P,A | EP - A1 - 0 335 159 METALLGESELLSCHAFT BAYER AG) * Ansprüche * -- | 1-4 | |
| A | EP - A1 - 0 230 703 (ATLANTIC RICHFIELD COMPANY) * Ansprüche * | 1-4 | RECHERCHIERTE SACHGEBIETE (Int Cl 5) |
| D | & US-A-4 647 619 ---- | | C 08 L 51/00 C 08 L 67/00 C 08 K |

Der vorliegende Recherchenbericht wurde für alle Patentansprüche erstellt.

| Recherchenort | Abschlußdatum der Recherche | Prüfer |
|---|---|---|
| WIEN | 05-12-1990 | WEIGERSTORFER |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument